# EUROPÄISCHE PATENTSCHRIFT

(11) **EP 1 382 951 B1**
(45) Veröffentlichungstag und Bekanntmachung des Hinweises auf die Patenterteilung: **05.04.2006**
(21) Anmeldenummer: 03015006.4
(22) Anmeldetag: 02.07.2003
(51) Int. Cl.: G01L 25/00, G01L 5/24

(54) **Drehmoment-Prüfgerät**
Torque-Testtool
Outil de test de torsion

(30) Priorität: 09.07.2002 DE 20210645 U
(43) Veröffentlichungstag der Anmeldung: 21.01.2004
(73) Patentinhaber: Eduard Wille GmbH & Co KG, 42349 Wuppertal (DE)
(72) Erfinder: Herbold, Siegfried, 42349 Wuppertal (DE)
(74) Vertreter: Weisse, Renate

(56) Entgegenhaltungen:
- US-A- 3 979 942
- US-A- 4 976 133
- PATENT ABSTRACTS OF JAPAN vol. 015, no. 487 (P-1286), 10. Dezember 1991 (1991-12-10) & JP 03 210447 A (JAPAN ATOM ENERGY RES INST), 13. September 1991 (1991-09-13)

## Beschreibung

Die Erfindung betrifft ein Prüfgerät zur Bestimmung von Drehmomenten, enthaltend: Sensormittel zur Erzeugung von elektrischen Signalen nach Maßgabe ausgeübter Drehmomente und Signalverarbeitungsmittel, auf welche die elektrischen Signale der Sensormittel aufgeschaltet sind und welche Meßwerte für das aufgebrachte Drehmoment liefern.

Solche Meßköpfe werden beispielsweise zur Kalibrierung von Drehrnomentschlüsseln benutzt. Die Sensormittel enthalten üblicherweise Dehnungsmeßstreifen. Diese Dehnungsmeßstreifen sind auf Teile aufgeklebt, welche durch das zu messende Drehmoment deformiert werden. Solche Dehnungsmeßstreifen liefern sehr schwache analoge Signale. Die analogen Signale sind meist nicht genau proportional dem auf den Drehmomentsensor aufgebrachten Drehmoment. Es ist daher eine Signalverarbeitung erforderlich, um ein das Drehmoment exakt wiedergebendes Signal zu erhalten. Dieses Signal wird durch Anzeigemittel angezeigt oder sonstwie, z.B. zur Ermittlung des zeitlichen Verlaufs oder der statistischen Verteilung des Drehmomentes Auswertemitteln zugeführt.

Einen solchen Meßkopf beschreibt beispielsweise die US 4,976,133. Ein Drehmomentschlüssel enthält eine elektrische Drehmomentanzeige mit einer Brücke von Dehnungsmeßstreifen. Zur Kalibrierung eines solchen Drehmomentschlüssels ist ein Meßkopf vorgesehen, der ebenfalls mit einer Brücke von Dehnungsmeßstreifen aufgebaut ist und auf welchen durch den Drehmomentschlüssel ein Drehmoment aufgebracht wird. Die Signale der Drehmomentanzeige und des Meßkopfes werden verglichen und bewirken einen Kalibriervorgang.

Jeder Drehmomentsensor hat einen begrenzten Meßbereich, in welchem er optimal arbeitet. Für unterschiedliche Meßbereiche sind daher verschiedene Meßköpfe mit entsprechend unterschiedlichen Drehmomentsensoren vorgesehen. Diese verschiedenen Meßköpfe werden nach Bedarf an die Anzeige- oder Auswertemittel angeschlossen oder über einen Umschalter angelegt.

Die Signalverarbeitung zur Erzeugung des das Drehmoment exakt wiedergebenden Signals erfolgt dabei üblicherweise in den Auswertemitteln. Diesen wird das analoge Signal zugeführt. Das erscheint sinnvoll, insbesondere wenn mehrere Drehmomentsensoren wahlweise auf die Anzeige- und Auswertemittel aufschaltbar sind. Dann brauchen die Signalverarbeitungsmittel nur einmal vorgesehen zu werden.

Die Übertragung des analogen Signals zu den Anzeige- und Auswertemitteln birgt die Gefahr einer Verfälschung des Signals durch Störeinflüsse in sich. Es sind aufwendige Abschirmmaßnahmen erforderlich.

Das Anschließen oder Umschalten von Meßköpfen an die Anzeige- oder Auswertemittel ist umständlich und kann zu Fehlbedienungen führen.

Der Erfindung liegt die Aufgabe zugrunde, ein Prüfgerät der eingangs genannten Art so auszubilden, daß Drehmomente über einen großen Meßbereich hinweg unter Vermeidung von Störungen und Fehlbedienungen gemessen werden können.

Erfindungsgemäß wird diese Aufgabe dadurch gelöst, daß
(a) das Prüfgerät eine Mehrzahl von Meßköpfen aufweist, von denen jeder einen Drehmomentsensor enthält,
(b) jeder Meßkopf gesonderte Signalverarbeitungsmittel mit einem Meßkopf-Signalausgang enthält, die in dem Meßkopf in unmittelbarer Nähe des jeweiligen Drehmomentsensors angeordnet sind,
(c) die Signalverarbeitungsmittel der Meßköpfe Kalibriermittel enthalten, durch welche in allen Meßköpfen durch gleiche Drehmomente an den Meßkopf-Signalausgängen gleiche Drehmoment-Meßdaten gewährleistet sind, und
(d) die Meßkopf-Signalausgänge aller Meßköpfe unmittelbar parallel auf Anzeige- oder Auswertemittel geschaltet sind.

Nach der Erfindung sind somit mehrere Meßköpfe vorgesehen, die entweder unterschiedliche Meßbereiche haben können oder an unterschiedliche zu prüfende Werkzeuge angepaßt sind. Jeder dieser Meßköpfe weist eigene Signalverarbeitungsmittel auf. Die Signalverarbeitungsmittel sind in gleicher Weise kalibriert, so, daß die davon gelieferten Drehmoment-Meßdaten miteinander vergleichbar sind. Ein bestimmtes Drehmoment T, das auf einen Meßkopf wirkt, liefert am Meßkopf-Signalausgang dieses Meßkopfes die gleichen Drehmoment-Meßdaten, wie das Drehmoment T am Meßkopf-Signalausgang eines anderen Meßkopfes liefern würde. Bei der Kalibrierung können durch die individuellen Signalverarbeitungsmittel individuelle Nichtlinearitäten der Drehmomentsensoren berücksichtigt werden. Die Meßköpfe können dann einfach unmittelbar parallel auf die Anzeige- oder Auswertemittel geschaltet werden. Wenn auf irgendeinen Meßkopf ein Drehmoment aufgebracht wird, dann wird dieses Drehmoment automatisch mit der richtigen Kalibrierung angezeigt oder ausgewertet. Die Verwendung eigener Signalverarbeitungsmittel in jedem Meßkopf stellt zwar einen zusätzlichen Aufwand dar. Dieser Aufwand wird aber weitestgehend kompensiert durch den Wegfall aufwendiger Maßnahmen zur Abschirmung und Störungsunterdrückung und der Umschaltmittel. Es ergibt sich aber der Vorteil einer vereinfachten Handhabung und der Verringerung der Gefahr von Fehlbedienungen.

Die Erfindung ist besonders vorteilhaft, wenn wenigstens einige der Meßköpfe unterschiedlich sind, beispielsweise in der Form daß wenigstens einige der Meßköpfe unterschiedliche Meßbereiche besitzen.

Vorteilhafterweise enthalten die Signalverarbeitungsmittel einen A/D-Wandler zum Umwandeln analoger Signale des Drehmomentsensors in digitale Daten, wobei diese digitalen Daten, erforderlichenfalls nach weiterer digitaler Signalverarbeitung, an den Meßkopf-Signalausgängen erscheinen. Die digitalen Daten können weitgehend ungestört auch zu entfernten Anzeige- oder Auswertemitteln übertragen werden. Insbesondere können Mittel zum drahtlosen Übertragen von an Meßkopf-Signalausgängen erscheinenden Daten auf die Anzeige- oder Auswertemittel vorgesehen sein.

Es kann wenigstens ein Meßkopf an einem Drehmomentschlüssel vorgesehen sein.

Eine besonders vorteilhafte Ausführung sieht vor, daß
(a) wenigstens einer der Meßköpfe ein feststehendes Gehäuse und als Drehmomentsensor einen in dem Gehäuse fest gehalterten äußeren Ringkörper, einen inneren Ringkörper mit einem Antriebsteil zum Angreifen eines zu messenden Drehmomentes, der mit dem äußeren Ringkörper über Stege verbunden ist, und Meßgebermittel aufweist, welche auf Verformung der Stege unter dem Einfluß des Drehmoments ansprechen,
(b) die Signalverarbeitungsmittel auf einer Platine montiert sind, die einen zentralen Durchbruch aufweist, in einer Vertiefung innerhalb des äußeren Ringkörpers auf dem inneren Ringkörper und den Stegen angeordnet und mit dem inneren Ringkörper verbunden ist, und
(c) das Antriebsteil durch den zentralen Durchbruch der Platine hindurchragt.

Ausführungsbeispiele der Erfindung sind nachstehend unter Bezugnahme auf die zugehörigen Zeichnungen näher erläutert.
- Fig.1: ist eine schematisch-perspektivische Darstellung und zeigt einen Drehmomentsensor, an dem eine Platine mit Signalverarbeitungsmitteln angebracht ist.
- Fig.2: ist eine auseinandergezogene, schematischperspektivische Darstellung ähnlich Fig.1.
- Fig.3: ist eine schematische Darstellung eines Prüfgerätes mit mehreren Meßköpfen und einem gemeinsamen Anzeigegerät.
- Fig.4: ist eine schematische Darstellung ähnlich Fig.3 eines Prüfgerätes mit Anzeige- und Auswertemitteln.
- Fig.5: ist eine schematische Darstellung ähnlich Fig.3 und 4 und zeigt ein Prüfgerät, bei welchem zur Anzeige und Auswertung ein Rechner mit Bildschirm vorgesehen ist.
- Fig.6: ist ein Blockdiagramm der Signalverarbeitungsmittel.

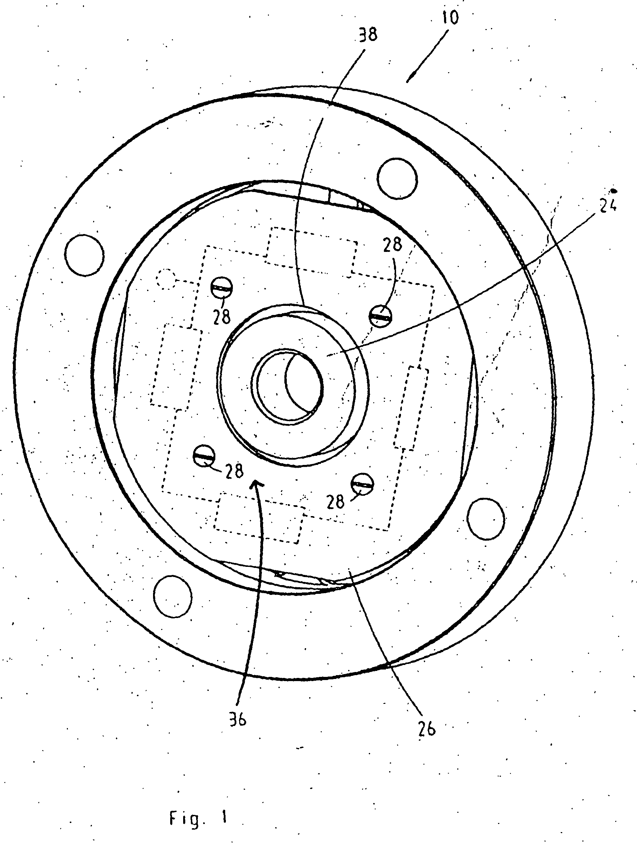

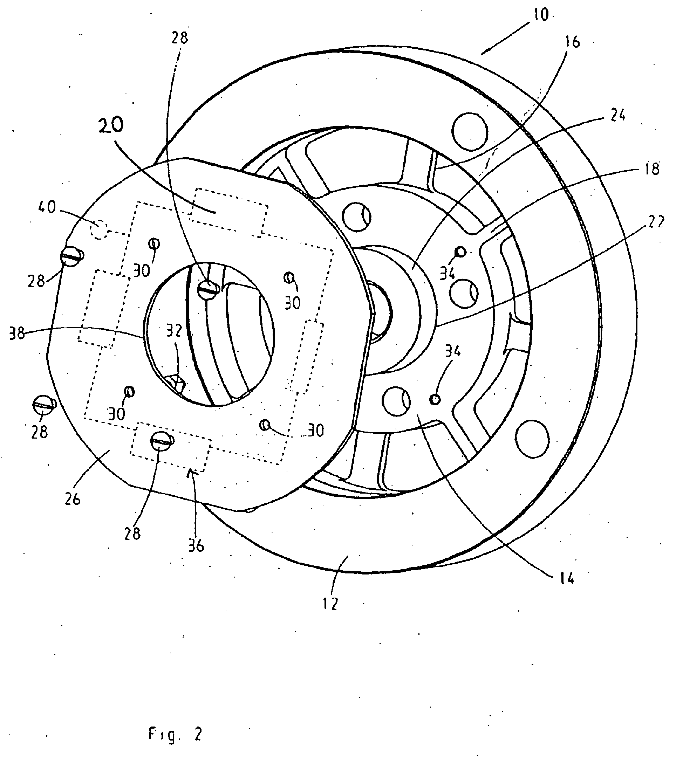

In Fig.1 und 2 ist mit 10 generell ein Drehmomentsensor bezeichnet. Wie am besten aus Fig.2 ersichtlich ist, enthält der Drehmomentsensor 10 einen äußeren Ringkörper 12 und einen inneren Ringkörper 14. Äußerer und innerer Ringkörper 12 bzw. 14 sind durch radiale Stege 16 und 18 miteinander verbunden. Die Stege 16 haben in Umfangsrichtung relativ große Breite, besitzen aber relativ geringe axiale Abmessungen. Die axialen Abmessungen der Stege 16 sind wesentlich geringer als die axiale Dicke des äußeren Ringkörpers 12. Die Stege 18 sind in Umfangsrichtung schmal, erstrecken sich aber in axialer Richtung nahezu über die gesamte Dicke des äußeren Ringkörpers 12. Breite und schmale Stege 16 bzw. 18 wechseln einander ab. Die Stege 16 und 18 sind in regelmäßiger Anordnung jeweils mit einem Winkelversatz von 45° zwischen benachbarten Stegen 16 und 18 angeordnet, so daß ein Kreuz von vier, um 90° gegeneinander winkelversetzten breiten Stegen gebildet wird. Die breiten Stege tragen Dehnungsmeßstreifen 20, die in einer Brückenschaltung angeordnet sind. Ein solcher Drehmomentsensor ist in der DE 202 09 850 U1 beschrieben. In dem zentralen Durchbruch 22 des inneren Ringkörpers 14 sitzt ein Antriebsteil 24, an welchem ein (nicht dargestelltes) Werkzeug zur Ausübung des zu messenden Drehmomentes angreifen kann.

Die in Fig.2 vordere Fläche des inneren Ringkörpers 14 und die vorderen Stirnflächen der Stege 16 und 18 liegen in einer Ebene, die gegenüber der Ebene der vorderen Stirnfläche des äußeren Ringkörpers etwas zurückgesetzt ist. Auf diese Weise wird innerhalb des äußeren Ringkörpers 12 und vor dem inneren Ringkörper 14 eine flache Vertiefung gebildet. In dieser Vertiefung sitzt eine Platine 26. Die Platine ist durch Schrauben 28 an dem inneren Ringkörper 14 befestigt. Die Platine 26 weist zu diesem Zweck Schraublöcher 30 auf. Die Schrauben 28 sind durch die Schraublöcher 30 und Abstandsstücke 32 hindurchgeführt und in Gewindebohrungen 34 des inneren Ringkörpers 14 eingeschraubt. Die Platine 26 ist damit im Abstand von dem inneren Ringkörper 14 und den Stegen 16 und 18 gehalten. Die Platine 26 trägt auf ihrer dem Ringteil 14 zugewandten Rückseite die in Fig.1 und 2 schematisch angedeuteten Bauelemente der Signalverarbeitungsmittel, die in Fig.1 und 2 generell mit 36 bezeichnet sind.

Die Platine hat einen zentralen Durchbruch 38. Durch diesen zentralen Durchbruch 38 ragt der Antriebsteil 24 hindurch, wie am besten aus Fig.1 ersichtlich ist.

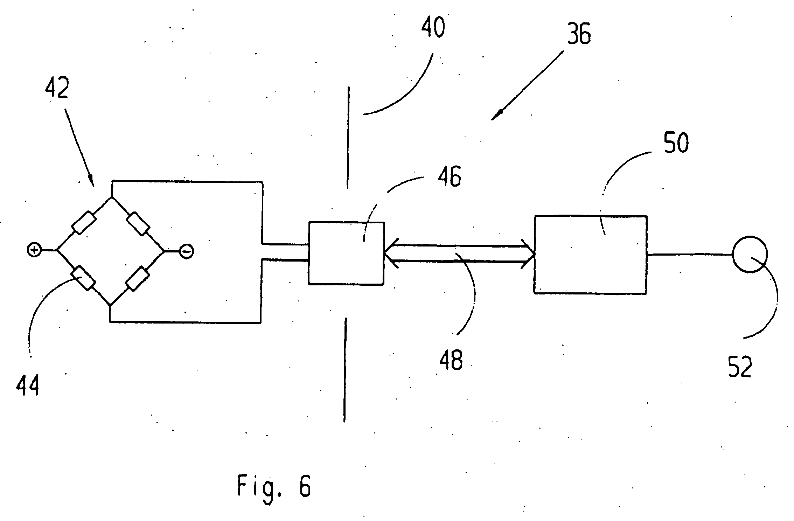

Die Signalverarbeitungsmittel 36 sind in Fig.6 dargestellt. In Fig.6 ist links von der Linie 40 der Meßgeber 42 und der Analogteil der Signalverarbeitungsmittel 36 und rechts von der Linie 40 der Digitalteil der Signalverarbeitungsmittel 36 dargestellt. Der Meßgeber 42 ist eine Brückenschaltung von Dehnungsmeßstreifen 44. Die Dehnungsmeßstreifen 44 sind auf die breiten Stege 16 aufgeklebt.

Die Dehnungsmeßstreifen 44 werden bei Aufbringen eines Drehmoments auf Scherung beansprucht und ändern dadurch ihre Widerstände. Die Dehnungsmeßstreifen liefern ein schwaches analoges Signal. Dieses analoge Signal ist auf eine integrierte Schaltung 46 aufgeschaltet. Die integrierte Schaltung 46 ist auf der Rückseite der Platine 26 montiert. Zwischen dem Meßgeber 42 und der Schaltung 46 liegen nur kurze Übertragungswege. Dadurch werden Störungen minimiert. Die integrierte Schaltung 44 ist eine Kombination von Vorverstärker und A/D-Wandier. Durch den Vorverstärker wird das schwache analoge Signal auf den für die A/D-Wandlung erforderlichen Pegel angehoben. Der A/D-Wandler erzeugt das analoge Signal wiedergebende digitale Meßdaten. Diese werden über einen Bus 48 auf eine integrierte Schaltung 50 aufgeschaltet. Die Schaltung 50 setzt die Meßdaten auf dem Bus in ein Digitalsignal um, welches das aufgebrachte Drehmoment in Nm oder mNm wiedergibt. Durch die Schaltung werden Nullpunktfehler und Nichtlinearitäten kompensiert. Außerdem erfolgt eine Justage zur Kalibrierung. An einem Meßkopf-Signalausgang wird dann ein Digitalsignal erhalten, welches unmittelbar das Drehmoment in Nm bzw. mNm wiedergibt.

Stattdessen kann die integrierte Schaltung auch so ausgelegt sein, daß der Meßkopf den Maximalwert des Drehmomentes eines Drehmomentpulses liefert.

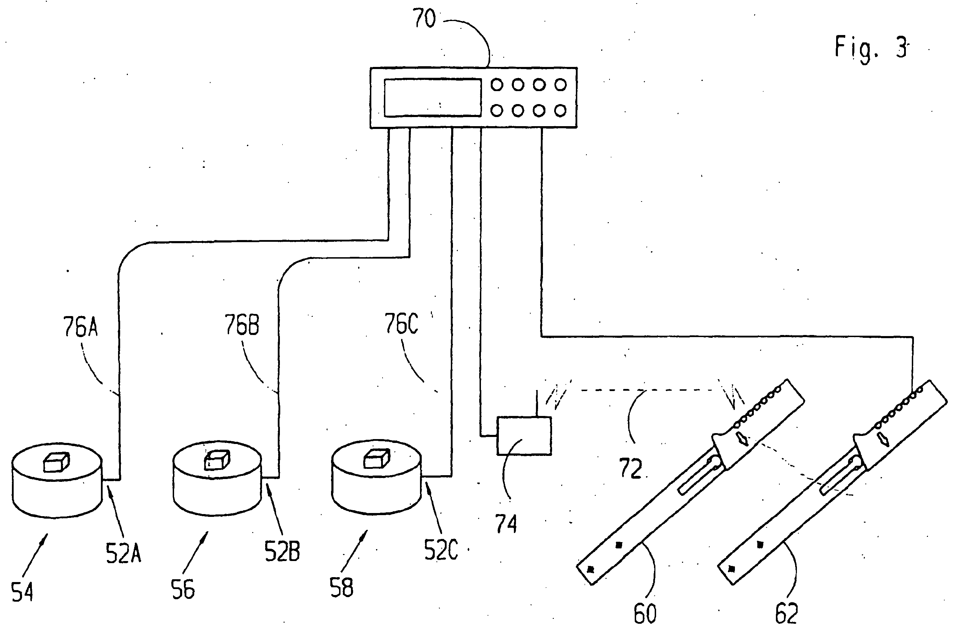

Fig.3 zeigt ein Prüfgerät mit drei Meßköpfen 54, 56 und 58 der vorstehend beschriebenen Art und zwei Drehmomentschlüsseln 60 und 62, die jeweils auch einen Drehmomentsensor mit Signalverarbeitungsmittein entsprechend Fig.6 aufweisen. Bei den Meßköpfen 54, 56 und 58 ist jeweils der ringförmige Außenkörper 12 des Drehmomentsensors fest in einem feststehenden Gehäuse 64, 66 bzw. 68. Die Meßköpfe 54, 56, 58 und die Drehmomentschlüssel 60 und 62 sind alle unmittelbar, d.h. ohne weitere Signalverarbeitung, parallel auf ein Anzeigegerät 70 aufgeschaltet. Dabei erfolgt die Aufschaltung der digitalen Drehmoment-Meßdaten des Drehmomentschlüssels 60 drahtlos. Das ist durch die punktierte Verbindung 72 angedeutet. Das Anzeigegerät 70 ist dabei mit einem Empfänger 74 verbunden.

Der Meßkopf 54 ist ein Meßkopf zum Prüfen von Schlagschraubern. Drehmomente werden pulsartig als aufeinanderfolgende Schläge aufgebracht. Der Meßkopf ist mit seinen Signalverarbeitungsmitteln so ausgelegt, daß am Meßkopf-Signalausgang 52A digitale Drehmoment-Meßdaten erscheinen, welche das maximal bei dem Drehmomentpuls auftretende Drehmoment wiedergibt. Diese Drehmoment-Meßdaten sind über eine Datenleitung 76A auf das Anzeigegerät 70 aufgeschaltet.

Die Meßköpfe 56 und 58 liefern digitale Drehmoment-Meßdaten in verschiedenen Meßbereichen an Meßkopf-Signalausgängen 52B bzw. 52C. Die unterschiedlichen Meßbereiche werden dadurch erreicht, daß die Stege 16 bei den verschiedenen Drehmomentsensoren unterschiedlich steif gemacht werden, also z.B. die Stege 16 unterschiedlich dick sind. Die Drehmoment-Meßdaten werden parallel zueinander und zu den Drehmoment-Meßdaten von dem Meßkopf 54 über Datenleitungen 76B bzw. 76C auf die Anzeigevorrichtung 70 aufgeschaltet.

Alternativ können die Meßköpfe 56 und 58 auch für gleiche Meßbereiche ausgelegt sein, wobei aber die Antriebsteile 24 zur Anpassung an unterschiedlicher Drehmoment-Werkzeuge unterschiedlich sind.

Die verschiedenen Meßköpfe 54, 56, 58 und Drehmomentschlüssel 60, 62 sind in gleicher Weise kalibriert. Gleiche Drehmomente erzeugen an den verschiedenen Meßköpfen gleiche Drehmoment-Meßdaten.

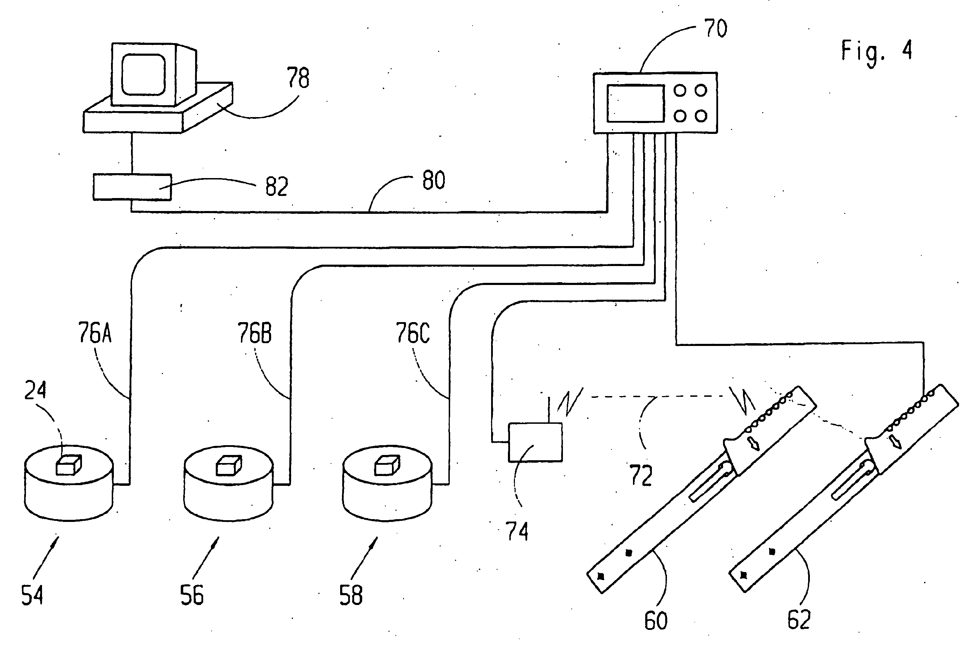

Fig.4 entspricht weitgehend der vorstehend beschriebenen Fig.3. Entsprechende Teile sind mit den gleichen Bezugszeichen versehen wie dort.

Bei der Ausführung nach Fig.4 ist zusätzlich zu der einfachen Anzeigevorrichtung 70 ein Rechner 78, z.B. ein Laptop, vorgesehen. Auf diesen Rechner 78 sind über eine Datenleitung 80 und einen Pegelwandler 82 das jeweils an dem Anzeigegerät 70 anliegende, digitalen Drehmoment-Meßdaten aufgeschaltet. Der Rechner 78 stellt Auswertemittel zur Auswertung der gemessenen Drehmomente dar. So kann der Rechner z.B. den zeitlichen Verlauf eines über einen Drehmomentschlüssel aufgebrachten Drehmoments verfolgen und die Lage eines beim Ansprechen des Drehmomentschlüssels auftretenden Knicks in der Drehmoment-über-Zeit-Charakteristik ermitteln. Die Drehmoment-Meßdaten können auch statistisch erfaßt und ausgewertet werden.

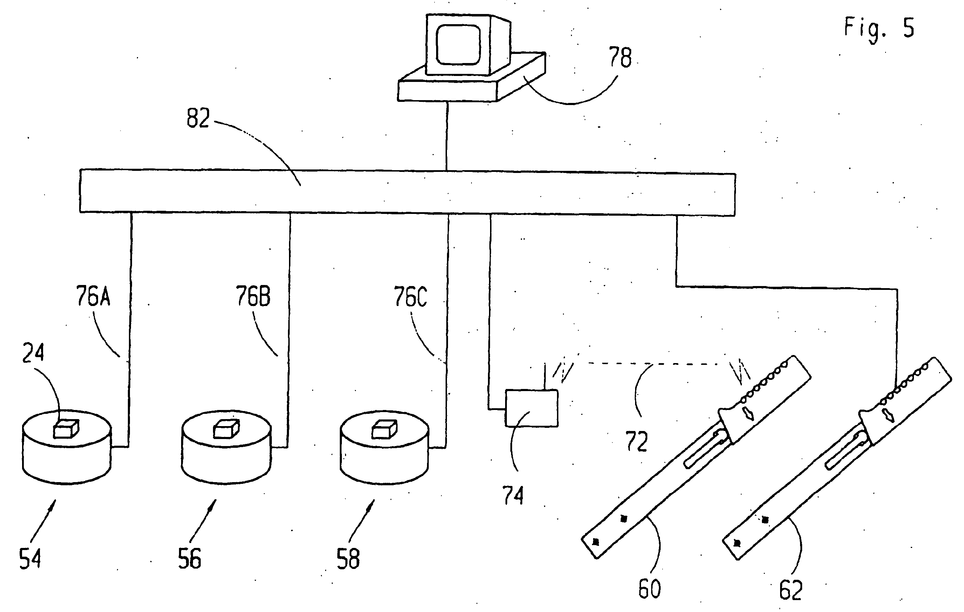

Fig. 5 ist ebenfalls ähnlich wie Fig.3 und 4. Entsprechende Teile sind wieder mit den gleichen Bezugsteichen versehen wie dort. Bei dem Prüfgerät von Fig.5 ist keine Anzeigevorrichtung vorgesehen sondern nur ein Rechner 78. Alle Meßkopf-Signalausgänge 52A, 52B, 52C und die Ausgänge der Drehmomentschlüssel 60 und 62 sind über einen Pegelwandler 82 auf diesen Rechner 78 aufgeschaltet. Der Bildschirm des Rechners 78 übemimmt die Funktion der Anzeigevorrichtung 70.

## Patentansprüche

1. Prüfgerät zur Bestimmung von Drehmomenten, enthaltend: Sensormittel zur Erzeugung von elektrischen Signalen nach Maßgabe ausgeübter Drehmomente und Signalverarbeitungsmittel, auf welche die elektrischen Signale der Sensormittel aufgeschaltet sind und welche Meßwerte für das aufgebrachte Drehmoment liefern, **dadurch gekennzeichnet, daß**
(a) das Prüfgerät eine Mehrzahl von Meßköpfen (54,56,58,60,62) aufweist, von denen jeder einen Drehmomentsensor enthält,
(b) jeder Meßkopf (54,56,58,60,62) gesonderte Signalverarbeitungsmittel (36) mit einem Meßkopf-Signalausgang (52) enthält, die in dem Meßkopf (54,56,58,60,62) in unmittelbarer Nähe des jeweiligen Drehmomentsensors angeordnet sind,
(c) die Signalverarbeitungsmittel der Meßköpfe Kalibriermittel enthalten, durch welche in allen Meßköpfen durch gleiche Drehmomente an den Meßkopf-Signalausgängen (52; 52A,52B,52C) gleiche Drehmoment-Meßdatenin gewährleistet sind, und
(d) die Meßkopf-Signalausgänge aller Meßköpfe (54,56,58,60,62) unmittelbar parallel auf Anzeige- oder Auswertemittel (70,78) geschaltet sind.

2. Prüfgerät nach Anspruch 1, **dadurch gekennzeichnet, daß** wenigstens einige der Meßköpfe (56,68) unterschiedliche Meßbereiche besitzen.

3. Prüfgerät nach Anspruch 1, **dadurch gekennzeichnet, daß** wenigstens einer der Meßköpfe (54) den Maximalwert des Drehmomentes eines Drehmomentpulses liefert.

4. Prüfgerät nach einem der Ansprüche 1 bis 4, **dadurch gekennzeichnet, daß** die Signalverarbeitungsmittel (36) einen A/D-Wandler (46) zum Umwandeln analoger Signale des Drehmomentsensors in digitale Daten enthalten und diese digitalen Daten, erforderlichenfalls nach weiterer Signalverarbeitung, an den Meßkopf-Signalausgängen (52) erscheinen.

5. Prüfgerät nach Anspruch 4, **gekennzeichnet durch** Mittel (72,74) zum drahtlosen Übertragen der an den Meßkopf-Signalausgängen (52) erscheinenden Daten auf die Anzeige- oder Auswertemittel (70,78).

6. Prüfgerät nach einem der Ansprüche 1 bis 5, **dadurch gekennzeichnet, daß** wenigstens ein Meßkopf an einem Drehmomentschlüssel (60,62) vorgesehen ist.

7. Püfgerät nach einem der Ansprüche 1 bis 6, **dadurch gekennzeichnet, daß**
(a) wenigstens einer der Meßköpfe (54,56,58) ein feststehendes Gehäuse (64,66,68) und als Drehmomentsensor (10) einen in dem Gehäuse (64,66,68) fest gehalterten ringförmigen Außenteil (12), einen ringförmigen Innenteil (14), der mit dem Außenteil über Stege (16) verbunden ist, einen an dem Innenteil sitzenden Antriebsteil (24), an dem ein zu messendes Drehmoment angreifen kann, und Meßgebermittel (42) aufweist, welche auf Verformung der Stege (16) unter dem Einfluß des Drehmoments ansprechen,
(b) die Signalverarbeitungsmittel (36) auf einer Platine (26) montiert sind, die einen zentralen Durchbruch (38) aufweist, in einer Vertiefung innerhalb des Außenteils (12) über dem Innenteil (14) und den Speichen (16,18) angeordnet und mit dem Innenteil (14) verbunden ist, und
(c) das Antriebsteil (24) durch den zentralen Durchbruch (38) der Platine (26) hindurchragt.

## Revendications

1. Instrument de contrôle destiné à déterminer des couples de rotation, comprenant : des moyens de capteur destinés à générer des signaux électriques en fonction des couples de rotation exercés et des moyens de traitement de signaux auxquels sont appliqués les signaux électriques des moyens de capteur et qui livrent des valeurs de mesure pour le couple de rotation appliqué, **caractérisé en ce que**
(a) l'instrument de contrôle présente plusieurs têtes de mesure (54,56,58,60,62) dont chacune comprend un capteur dynamométrique,
(b) chaque tête de mesure (54,56,58,60,62) comprend des moyens de traitement de signaux séparés (36) munis d'une sortie signaux pour tête de mesure (52) et disposés dans la tête de mesure (54,56,58,60,62) directement à côté du capteur dynamométrique respectif,
(c) les moyens de traitement de signaux des têtes de mesure comprennent des moyens de calibrage permettant de garantir dans toutes les têtes de mesure grâce aux mêmes couples de rotation aux sorties signaux de tête de mesure (52;52A,52B,52C) les mêmes données de mesure des couples de rotation, et
(d) les sorties signaux de tête de mesure de toutes les têtes de mesure (54,56,58,60,62) sont appliquées directement parallèlement aux moyens d'affichage ou d'évaluation (70,78).

2. Instrument de contrôle selon la revendication 1, **caractérisé en ce qu'**au moins quelques unes des têtes de mesure (56,58) possèdent des plages de mesure différentes.

3. Instrument de contrôle selon la revendication 1, **caractérisé en ce qu'**au moins l'une des têtes de mesure (54) livre la valeur maximale du couple de rotation d'une impulsion de couple.

4. Instrument de contrôle selon l'une quelconque des revendications 1 à 4, **caractérisé en ce que** les moyens de traitement de signaux (36) comprennent un convertisseur analogique/numérique (46) destiné à convertir les signaux analogiques du capteur dynamométrique en données numériques et que ces données numériques apparaissent, le cas échéant après un traitement supplémentaire des signaux, aux sorties signaux de tête de mesure (52).

5. Instrument de contrôle selon la revendication 4, **caractérisé par** des moyens (72,74) destinés à transmettre sans fil aux moyens d'affichage ou d'évaluation (70,78) les données apparaissant aux sorties de signaux de tête de mesure (52).

6. Instrument de contrôle selon l'une quelconque des revendications 1 à 5, **caractérisé en ce qu'**au moins une tête de mesure est prévue par clé dynamométrique (60,62).

7. Instrument de contrôle selon l'une quelconque des revendications 1 à 6, **caractérisé en ce que**
(a) au moins l'une des têtes de mesure (54,56,58) présente un boîtier fixe (64,66,68) et, comme capteur dynamométrique (10), un élément annulaire extérieur (12) maintenu fixement dans le boîtier (64,66,68), un élément annulaire intérieur (14) relié à l'élément extérieur par des traverses (16), une pièce d'entraînement (24) se trouvant sur l'élément intérieur et pouvant agir sur un couple de rotation à mesurer, et des moyens transmetteurs de mesure (42) qui répondent à la déformation des traverses (16) sous l'influence du couple de rotation,
(b) les moyens de traitement de signaux (36) sont disposés sur une platine (26) qui présente un perçage central (38), est disposée dans une cavité située à l'intérieur de l'élément extérieur (12) au dessus de l'élément intérieur (14) et des traverses (16,18) et est reliée à l'élément intérieur (14), et
(c) la pièce d'entraînement (24) émerge du perçage central (38) de la platine (26).

## Claims

1. Testing device for measuring torques, comprising: sensor means for generating electrical signals in response to exerted torques, and signal processing means to which the electrical signals are applied and which provide measuring values of the exerted torque, **characterized in that**
(a) the testing device has a plurality of measuring heads (54, 56, 58, 60, 62) each of which has a torque sensor,
(b) each measuring head (54, 56, 58, 60, 62) comprises separate, individual signal processing means (36) with a measuring head output (52) which are arranged in the measuring head (54, 56, 58, 60, 62) in close proximity of the respective torque sensor,
(c) the signal processing means of the measuring heads comprise calibrating means ensuring that in the measuring heads the same torque measuring values at the measuring head signal outputs (52; 52A, 52B, 52C) for the same torques, and
(d) the measuring head outputs of all measuring heads (54, 56, 58, 60, 62) are directly connected in parallel to display- or evaluation means (70, 78).

2. Testing device according to claim 1, **characterized in that** at least some of the measuring heads (56, 58) have different measuring ranges.

3. Testing device according to claim 1, **characterized in that** at least one of the measuring heads (54) provides the maximum torque value of a torque pulse.

4. Testing device according to any of the claims 1 to 4, **characterized in that** the signal processing means (36) comprise an A/D-converter (46) for converting the analog signals of the torque sensor into digital signals and these digital data appear at the measuring head outputs (52), if necessary after further signal processing.

5. Testing device according to claim 4, **characterized by** means (72, 74) for wireless transmission of the data appearing at the measuring head output (52) to the diplay or evaluation means (70, 78).

6. Testing device according to any of claims 1 to 5, **characterized in that** at least one of the measuring heads forms part of a torque wrench (60, 62).

7. Testing device according to any of the claims 1 to 6, **characterized in that**
(a) at least one of the measuring heads (54, 56, 58) comprises a stationary housing (64, 66, 68), the torque sensor (10) comprising an outer annular body (12) fixedly retained in the housing (64, 66, 68), an inner annular body (14) connected with the outer annular body through webs (16), a driving part (24) permitting exerting of a torque thereon and attached to the inner annular body, and measuring pick-up means (42) responding to deformation of the webs (16) under the action of the torque,
(b) the signal processing means (36) are mounted on a printed circuit board (26) having a central aperture (38) therethrough, the printed circuit board being arranged in a shallow cavity within the outer body (12) and above the inner body (14) and the webs (16, 18) and being attached to the inner annular body (14), and
(c) the driving part (24) extends through the central aperture (38) of the printed circuit board (26).
